# EUROPEAN PATENT APPLICATION

(11) **EP 1 859 891 A1**
(43) Date of publication of application: **28.11.2007**
(21) Application number: 06405230.1
(22) Date of filing: 26.05.2006
(51) Int. Cl.: B23K 26/06, B23K 26/073

(54) **Device for automatically selecting a beam mode in laser processing machine**

(71) Applicant: YAMAZAKI MAZAK CORPORATION, Niwa-gun, Aichi (JP)
(72) Inventor: Yamazaki, Tsunehiko c/o Yamazaki Mazak Corporation, Niwa-gun, Aichi pref. (JP); Miyakawa, Naoomi c/o Yamazaki Mazak Corporation, Niwa-gun, Aichi pref. (JP)
(74) Representative: Moinas, Michel

(57) **Abstract**

A device for automatically selecting a beam mode by limiting an outer diameter size of a laser beam in a laser resonator of a laser processing machine is provided. A laser emitting device (100) emits a laser beam (LB) in a housing to supply it through an output lens (130) to a processing torch (10). A device for automatically selecting a beam mode (200) is mounted in a direction which is perpendicular to a center axis of the laser beam, and has a diaphragm member (220) which is guided by a linear guide. A piston rod (244) is driven by a cylinder (240) mounted outside of a housing, and drives a permanent magnet (250) which has one polarity. A permanent magnet (230) which is mounted to the diaphragm member and has the other polarity is driven so that an openings (222) or (224) of the diaphragm member is automatically selected.

## Description

### BACKGROUND OF THE INVENTION

### Field of the Invention

The present invention relates to a device for automatically selecting a beam mode in a laser processing machine by automatically changing a diameter of a laser beam.

### Description of the Related Art

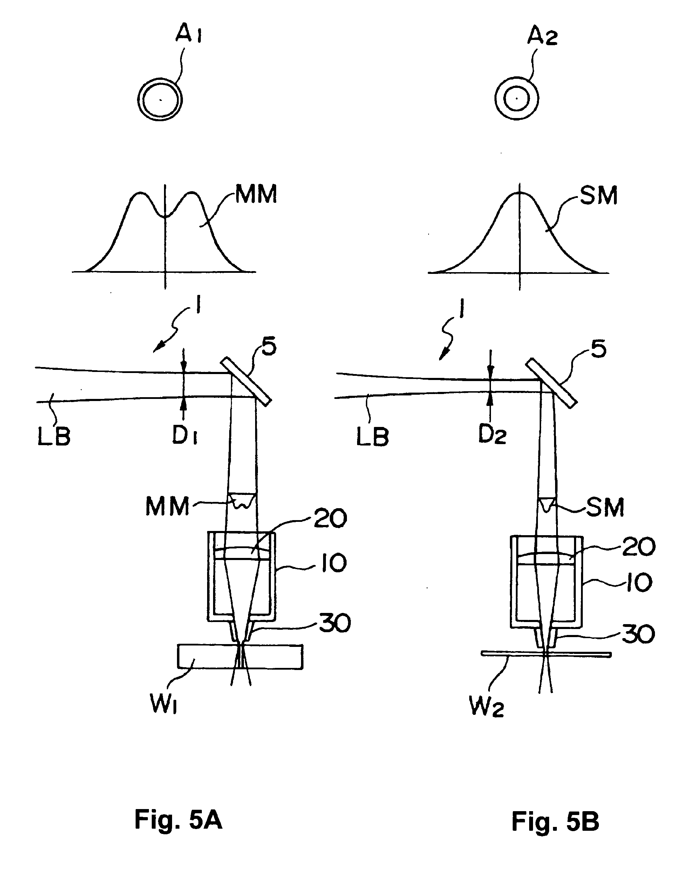

FIGS. 5A and 5B are views to illustrate a relationship between a diameter of a laser beam emitted from a laser resonator and a beam mode, and its influence on the efficiency of a processing.

A laser beam LB generated in a laser resonator which is generally denoted by reference numeral 1 is turned by a turning mirror 5 to be input into a touch 10 for a laser processing. The touch 10 is provided with a condenser lens 20 therein, and the condenser lens 20 condenses the laser beam which is input as generally parallel light rays, so that the laser beam passes through a nozzle 30 with its focal point falling on works (articles to be processed) W₁ and W₂ to perform a laser processing on the works W₁ and W₂.

As shown in FIG. 5A, for a work W₁ having a larger thickness such as a steel plate having a thickness of 25 mm to 6 mm, the resonator 1 emits a laser beam LB having a larger diameter D₁. A laser beam LB having a larger diameter provides a so-called multimode MM which is a beam mode showing the energy of the laser beam.

In the multimode MM, a light spot condensed on the work W₁ has a larger diameter. The light spot having a larger diameter inputs a large amount of energy to the work W₁, which allows a processing to the work W₁ of a thick plate to be performed at high speed with high quality.

To the contrary, as shown in FIG. 5B, for a work W₂ having a smaller thickness such as a steel plate having a thickness of 6 mm to 0.2 mm, the resonator 1 emits a laser beam LB having a smaller diameter D₂. A laser beam LB having a smaller diameter D₂ provides a so-called single mode SM which is a laser mode showing the energy of the laser beam.

In the single mode SM, a light spot condensed on the work W₂ has a smaller diameter. The light spot having a smaller diameter inputs the energy into one point on the work W₂, which allows a processing to the work W₂ of a thin plate to be performed at high speed with high quality.

Japanese Patent Laid-Open Publication No. 8-19888 (Patent Document 1) discloses a device for switching output modes.

For a larger diameter D₁ of a laser beam, a diaphragm member A₁ having a larger inner diameter, which is called an aperture, is provided in the resonator 1. Similarly, for a smaller diameter D₂ of a laser beam, an aperture A₂ having a smaller inner diameter is provided in the resonator 1.

One object of the present invention is to provide a device for automatically selecting a diameter size of an aperture depending on a thickness or material of a work to be processed in a laser processing machine.

### SUMMARY OF THE INVENTION

A device for automatically selecting a beam mode in a laser processing machine according to the present invention basically comprises: a diaphragm member which is mounted in a housing of a laser resonator in the laser processing machine and has a plurality of openings having different inner diameter sizes to narrow an outer diameter size of a laser beam; a device for guiding the diaphragm member; a permanent magnet which is mounted to the diaphragm member and has one magnetic polarity; a driving device which is mounted outside of the housing of the laser resonator; and a permanent magnet which is mounted to the driving device opposite to the permanent magnet of the diaphragm member and has the other polarity.

The device for guiding the diaphragm member is a linear guide, and the driving device is a piston cylinder.

The device for guiding a diaphragm member in form of a rotary arm is a rotating bearing, and the driving device may be a pulse motor.

A device for automatically selecting a beam mode in a laser processing machine according to the present invention comprises the above means, so that a diaphragm member is arranged in a housing of a laser emitting device which is vacuum to be filled with a laser gas, and the diaphragm member is operated in a noncontact manner from outside of the housing to safely and reliably select a mode of laser beam. Thus, a beam mode which is the most appropriate for specific processing conditions is automatically obtained.

### BRIEF DESCRIPTION OF THE DRAWINGS

FIG. 1 is a view to illustrate an example of the present invention;
FIG. 2 is a front elevational view of a diaphragm member;
FIG. 3 is a view to illustrate another example of the present invention;
FIG. 4 a front elevational view of a diaphragm member;
FIG. 5A is a view to illustrate beam modes; and
FIG. 5B is a view to illustrate beam modes.

### DETAILED DESCRIPTION OF THE PREFERRED EMBODIMENTS

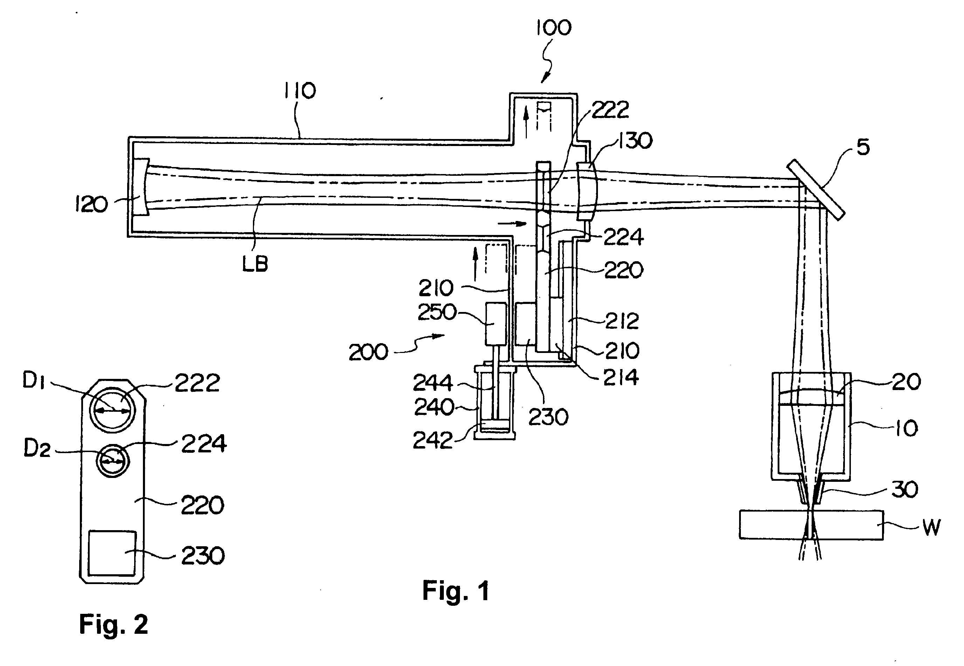

FIG. 1 is a view to schematically illustrate a device for automatically selecting a beam mode in a laser processing machine according to the present invention, while FIG. 2 is a front elevational view to show a diaphragm member.

A laser emitting device which is generally denoted by reference numeral 100 has a housing 110 which is vacuum to be filled with a laser gas. In the housing 110, an optical system 120 such as a reflection mirror is arranged, and a laser beam LB is emitted toward it.

The laser beam LB is output from an output lens 130 of an emitting device toward a light path (not shown), in which a turning mirror 5 sends the laser beam LB toward a torch 10.

After entering into the torch 10, the laser beam is condensed by a condenser lens 20 to be irradiated from a nozzle 30 onto a work W.

A device for automatically selecting a beam mode which is generally denoted by reference numeral 200 has a casing 210 which extends in a direction perpendicular to the housing 110 of the laser emitting device including a reflection mirror, and a guide rail 212 is provided in the casing 210.

A linear guide 214 is slidably supported to the guide rail 212 to which a plate-like diaphragm member 220 is mounted.

As also shown in FIG. 2, the diaphragm member 220 has a first opening 222 and a second opening 224. The first opening 222 is formed into a larger aperture D₁ corresponding to the output mode in a multimode, and the second opening 224 is formed into a smaller aperture D₂ corresponding to the output in a single mode.

The diaphragm member 220 is provided with a permanent magnet 230 which has one polarity (S) on a surface opposite to the linear guide 214.

A cylinder 240 is arranged parallel to the diaphragm member 220 across the casing 210. The cylinder 240 includes a piston 242 therein which is driven by air for example.

The piston rod 244 has a tip end to which a permanent magnet 250 having the other polarity (N) is attached.

Movement of the permanent magnet 250 with the piston rod 244 causes the permanent magnet 230 in the casing 210 to move in the same way, thereby the diaphragm member 220 slides along the guide rail 212.

This movement selectively inserts the first opening 222 or the second opening 224 of the diaphragm member into the light path system to emit a laser beam. In this way, the aperture of a laser beam LB can be optionally switched between an aperture for multimode and an aperture for single mode.

Thus, a beam mode which is the most appropriate for specific processing conditions can be automatically selected by adding a function to automatically select a beam mode corresponding to a thickness, material, processing condition of a work or the like in an NC program of the laser processing machine.

This allows a laser processing to be performed at high speed with high quality under the most appropriate processing conditions.

A device for automatically selecting a beam mode according to the present invention has a diaphragm member equipped in a casing of an optical system to emit a laser beam so that the diaphragm member can be operated in a noncontact manner by an actuator arranged outside of the casing. Thus, beam modes are smoothly changed, and each beam mode is stable.

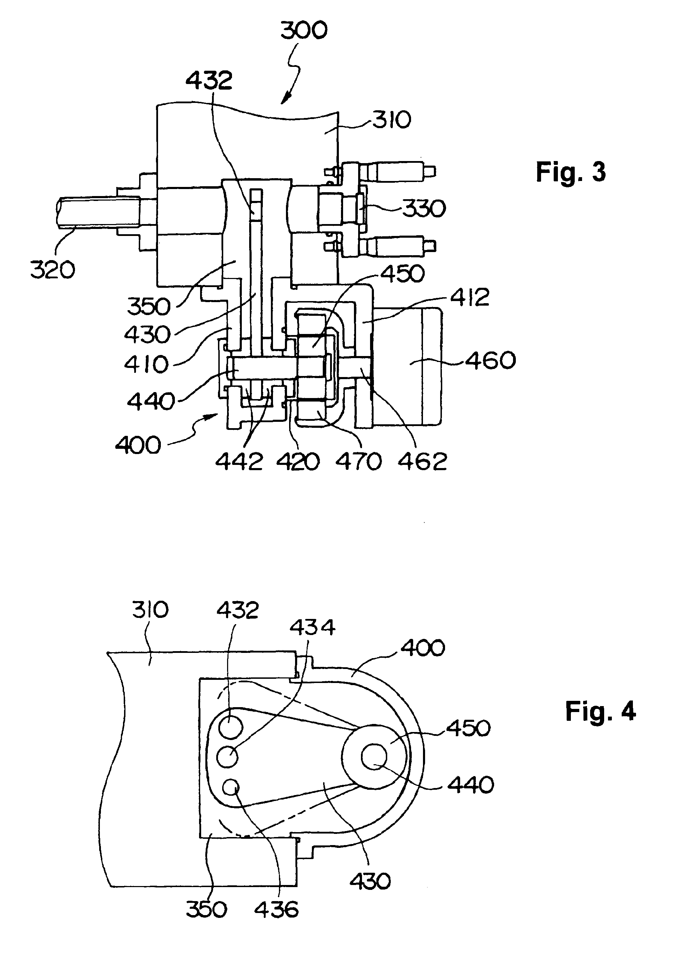

FIG. 3 and FIG. 4 are views to illustrate another example of the present invention.

A laser beam emitting device 300 has an end plate 310 of a laser oscillator and a light path tube 320 of a light path system to emit a laser on one end of the end plate 310.

To the other end of the end plate 310 is provided a laser mirror 330. The end plate 310 has a space 350 therein, and a device for automatically selecting a beam mode 400 is provided into an opening of the space 350 in the end plate 310.

The device for automatically selecting a beam mode 400 has a housing 410 which is mounted opposite to the opening 350 of the end plate 310. The housing 410 is provided with a rotating shaft 440 via a bearing 442. A rotary arm 430 is swingably mounted to the rotating shaft 440.

As shown in FIG. 4, the rotary arm 430 has a plurality of openings 432, 434 and 436 formed therein for apertures having different diameter sizes.

In this example, the rotary arm 430 has three openings, but any other number of openings may be formed therein.

A cylindrical permanent magnet 450 having one polarity (S) is attached to one end of the rotating shaft. A casing 420 is provided around the permanent magnet 450, the inside of the casing being in communication with the space 350 of the end plate 310.

A pulse motor 460 is mounted to a housing 412, and the pulse motor 460 has an output shaft 462 to which a permanent magnet 470 having the other polarity (N) is provided. The permanent magnet 470 is positioned opposite to the permanent magnet 450 in a noncontact manner across the casing 420.

The rotation of the pulse motor 460 is transmitted via the permanent magnet 470 to the permanent magnet 450 on the side toward the rotary arm 430 so that any aperture can be selected.

As described above, according to the present invention, a diaphragm member is arranged in a housing of a laser resonator which is highly vacuum to be filled with a required gas, and is operated in a noncontact manner by driving means which is mounted outside of the housing.

Thus, a beam mode of a laser processing machine can be automatically selected without affecting the atmosphere in a laser resonator

## Claims

1. A device (200, 400) for automatically selecting a beam mode in a laser processing machine, comprising: a diaphragm member (220, 430) which is mounted in a housing (210, 410) of a laser resonator in the laser processing machine and has a plurality of openings (222, 224, 432, 434, 436) having inner diameter sizes to narrow an outer diameter size of a laser beam (LB); a device for guiding (212, 214, 440, 442) the diaphragm member (220, 430); a permanent magnet (230, 450) which is mounted to the diaphragm member (220, 430) and has one magnetic polarity (S); a driving device (240, 242, 244, 460, 462) which is mounted outside of the housing of the laser resonator; and a permanent magnet (250, 470) which is mounted to the driving device opposite to the permanent magnet (230, 450) of the diaphragm member (220, 430) and has the other polarity (N).

2. The device (200) for automatically selecting a beam mode in a laser processing machine according to claim 1, wherein the device for guiding the diaphragm member (220) is a linear guide (214), and the driving device is a piston cylinder (240).

3. The device (400) for automatically selecting a beam mode in a laser processing machine according to claim 1, wherein the device for guiding a diaphragm member (430) in form of a rotary arm is a rotating bearing (442), and the driving device is a pulse motor (460).

## Amended claims

### Amended claims in accordance with Rule 86(2) EPC.

**1.** A device (200) for automatically selecting a beam mode in a laser processing machine, comprising: a diaphragm member (220) which is mounted in a housing (210) of a laser resonator in the laser processing machine and has a plurality of openings (222, 224) having inner diameter sizes to narrow an outer diameter size of a laser beam (LB); a linear guide (214) for guiding the diaphragm member (220); a permanent magnet (230) which is mounted to the diaphragm member (220) and has one magnetic polarity (S); a piston cylinder (240) for driving the diaphragm member which is mounted outside of the housing of the laser resonator; and a permanent magnet (250) which is mounted to the piston facing opposite to the permanent magnet (230) of the diaphragm member (220) and has the other polarity (N).
